# EUROPEAN PATENT SPECIFICATION

(11) **EP 3 034 672 B1**
(45) Date of publication and mention of the grant of the patent: **03.07.2019**
(21) Application number: 13891472.6
(22) Date of filing: 20.12.2013
(51) Int. Cl.: D06F 39/00, D06F 39/14, D06F 37/42

(54) **DOOR-OPENING INDICATOR FOR DRUM WASHING MACHINE AND DOOR-OPENING CONTROL METHOD THEREFOR**
TÜRÖFFNUNGSANZEIGER FÜR TROMMELWASCHMASCHINE UND TÜRÖFFNUNGSSTEUERUNGSVERFAHREN DAFÜR
INDICATEUR D'OUVERTURE DE PORTE POUR MACHINE À LAVER À TAMBOUR ET PROCÉDÉ DE COMMANDE D'OUVERTURE DE PORTE À CET EFFET

(30) Priority: 16.08.2013 CN 201310359520
(43) Date of publication of application: 22.06.2016
(73) Proprietor: Haier Group Corporation, Qingdao, Shandong 266101 (CN); Qingdao Haier Drum Washing Machine Co., Ltd., Shandong 266101 (CN)
(72) Inventor: ZHANG, Huacheng, Qingdao Shandong 266101 (CN); LI, Zeheng, Qingdao Shandong 266101 (CN); PI, Xiaojie, Qingdao Shandong 266101 (CN); HE, Yunfeng, Qingdao Shandong 266101 (CN)
(74) Representative: Ziebig, Marlene
(86) International application number: PCT/CN2013/090089
(87) International publication number: WO 2015/021725

(56) References cited:
- EP-B1- 1 654 411
- WO-A1-2012/068646
- CN-A- 1 738 205
- CN-A- 102 108 628
- CN-A- 102 156 570
- CN-U- 2 122 538
- CN-U- 202 116 868
- CN-U- 202 287 094
- CN-U- 202 323 449
- DE-A1-102004 015 081
- JP-A- H02 134 682
- JP-A- H11 244 575
- US-A1- 2007 180 869
- US-A1- 2008 034 810
- US-A1- 2008 039 976
- US-A1- 2013 099 715

## Description

### FIELD OF THE INVENTION

The present invention relates to the field of household appliances, and particularly to a door-opening indicator for drum washing machine and a door-opening control method therefor.

### BACKGROUND OF THE INVENTION

Generally, the drum washing machine is a device that can clean washings, that is to say, it can remove stains attached to clothes, bed products and the like through washing, rinsing and dewatering processes by using the action of detergent and water.

To this end, a door body where the washings are picked and placed is mounted on the washing machine. In the drum washing machine, the above door body is generally mounted to the front, the door of the drum washing machine is mounted with a switch, and the function of the switch is that the door can be locked in the process of driving of the drum washing machine, to prevent water inside the washing machine from flowing out due to opening of the door.

The switch is a device that can lock or unlock the door of the drum washing machine, the door switch locks or unlocks a hook mounted to the door according to a control signal of a control portion, and in the case that the door switch is in a power-off situation, the user can open or close the door at will.

On the other hand, when the existing drum washing machine is in a drive state, the door switch will switch on, so that the door is kept in a locked state, and when the power supply on the drum washing machine is cut off or the drum washing machine is switched to a pause state, the door switch will be switched to an unlock state, so that the door is in an openable state.

JP H11 244575 A describes a washing machine with an electronic unit that controls the washing machine. The washing machine features a light emitting display unit arranged on a door of the washing machine that signals different operating states of the washing machine. The door of the washing machine is lockable by a locking mechanism. If the door is to be opened during in a process step, wherein it is supposed to be closed, this will be sensed by a handle sensor located on a hook portion of the door. Accordingly, an acoustic warning signal accompanied by an optical signal are released.

US 2008/039976 A1 discloses a method of controlling the opening of a door of a laundry treatment machine. When a door opening signal is detected during operation of the machine, the temperature and water level inside the machine are reduced and the door is opened.

US 2008/039976 A1 describes a front-loading machine for treating laundry. The machine comprises an opening device and a sensor to detect incursion in a contact zone to increase the operational comfort.

DE 10 2004 015081 A1 describes a washing machine with a lighting device that allows for illumination of an area in front of the machine when the door of the machine is closed.

WO 2012/068646 A1 concerns a seal for the door opening of a washing machine, wherein the door seal includes a luminous element.

US 2007/180869 A1 suggests a washing machine with a visual display to provide information on the closure state of the door.

JP H02 134682 A illustrates a displaying apparatus for a washing machine to discriminate an operation progress state or the like at a distance by arranging optical fiber cables on the front surface of an equipment main body and turning on LEDs.

EP 1 654 411 B1 shows a washing machine that comprises a door, flexibly mountable onto the front panel depending on a preferred opening direction.

US 2013/099715 A1 describes an apparatus for opening and closing a door of a domestic appliance. The door is driven by a drive a drive apparatus on user request.

However, the existing drum washing machine has the following problems.

The user, in the process of using the washing machine, often needs to open or close the door of the washing machine, as the door of the drum washing machine is disposed in the front, in order to prevent that the water in the drum flows out and the temperature in the drum is too higher during drying and to prevent hot air scalding men, door opening is not allowed. However, there is no prompt to instruct the user how to open the door and when to open the door. The user is confused in use.

At present, the door of the drum washing machine is not allowed to be opened in the washing process, only the "start/pause" button on the front control panel of the washing machine can be pressed, and the computer programmable controller can release the door lock when judging that the door can be opened. However, generally, the user does not know that without seeing the instructions, which often results in that the user does not know where to start when he is to open the door. The existing washing machine cannot provide a relatively clear door-opening time and a door-opening method.

The present invention is proposed based on the above disadvantages, whereby JP H11244575 A may be considered the closest prior art.

### SUMMARY OF THE INVENTION

An objective of the present invention is to provide a door-opening indicator that facilitates users to judge whether a door body is openable and a method for opening a door body.

To achieve the foregoing objective, a drum washing machine according to the features of claim 1 as well as a door-opening method according to the features of claim 7 have been provided.

The touch area and the opening/closing sensor of the touch sensor are disposed on the door body of the washing machine, and the color-changeable indicator lamp set is disposed on the front portion of the washing machine; or the touch area, the opening/closing sensor and the color-changeable indicator lamp set are all disposed on the door body of the washing machine, and preferably, the color-changeable indicator lamp set is disposed adjacent to or around the touch area.

The touch area, the opening/closing sensor and the color-changeable indicator lamp set are preferably all disposed on a ring-like decorative box of the door body, preferably, the color-changeable indicator lamp set is disposed around the touch area, and more preferably, the color-changeable indicator lamp set is disposed on the touch area.

The door-opening indicator is preferably disposed on the door body, the door-opening indicator is connected to the computer programmable controller through a cable, and the wiring direction of the cable is through a hinge along a gap between a door body window screen and a viewing window and then connected to the computer programmable controller along the housing of the washing machine.

The touch area is preferably capacitive sensing or resistive sensing or optical sensing, the door lock is an electromagnetic door lock automatically popping up.

A door-opening control method for the drum washing machine according to the features of claim 7 has also been provided.

The computer programmable controller of the washing machine controls the indicator lamp set to change the color to display the working state of the washing machine, wherein the washing flow state of the washing machine includes one of water supply, washing, rinsing, drainage, spin-dry, drying and pause states or a combination thereof.

The present invention has the following beneficial effects:
1. The present invention adopts setting of a lamp set, making it convenient for users to judge whether the door body is in an openable state and instructing the users when to open the door, which solves the user's confusion in use, and the washing machine is beautiful, which increases diversity.
2. The touch sensor of the present invention directly controls opening of the door body, which changes the mechanical opening manner and avoids the phenomenon that the strength is great and damages the door body.
3. The present invention controls door opening in a touch sensing manner, which can better guide the users to operate, strengthen the man-machine dialogue, and is easy to operate, and touch operations are more modernized.
4. The indicator lamp set of the present invention can display the state of the washing machine, so that the users can clearly grasp the state of the washing machine through the change of the color of the indicator lamp set, and the display is more intuitive.

### BRIEF DESCRIPTION OF THE DRAWINGS

FIG. 1 is a flow chart of a door-opening control method for a drum washing machine according to the present invention;
FIG. 2 is a schematic diagram of positions of an indicator lamp set and a touch sensor in a door-opening indicator for a drum washing machine according to the present invention;
FIG. 3 is a connection diagram of a door-opening control signal of a drum washing machine according to the present invention;
FIG. 4 is a schematic structural diagram of a door-opening indicator for a drum washing machine according to the present invention;
FIG. 5 is a schematic diagram of positions of an indicator lamp set and a touch sensor in a door-opening indicator for a drum washing machine according to the present invention;
FIG. 6 is a schematic diagram of positions of an indicator lamp set and a touch sensor in a door-opening indicator for a drum washing machine according to the present invention;
FIG. 7 is a schematic diagram of positions of an indicator lamp set and a touch sensor in a door-opening indicator for a drum washing machine according to the present invention;
FIG. 8 is a schematic diagram of positions of an indicator lamp set and a touch sensor in a door-opening indicator for a drum washing machine according to the present invention; and
FIG. 9 is a schematic diagram of positions of an indicator lamp set and a touch sensor in a door-opening indicator for a drum washing machine according to the present invention.

1. computer programmable controller of the washing machine 2. cable 3. touch sensor 4. washing machine door body 5. door body decorative box 6. light guide region 7. indicator lamp set 8. opening/closing sensor 9. touch area 10. LED lamp 11. front panel.

### DETAILED DESCRIPTION OF THE INVENTION

A door-opening device and a door-opening method for a drum washing machine of the present invention are described below in detail with reference to the accompanying drawings.

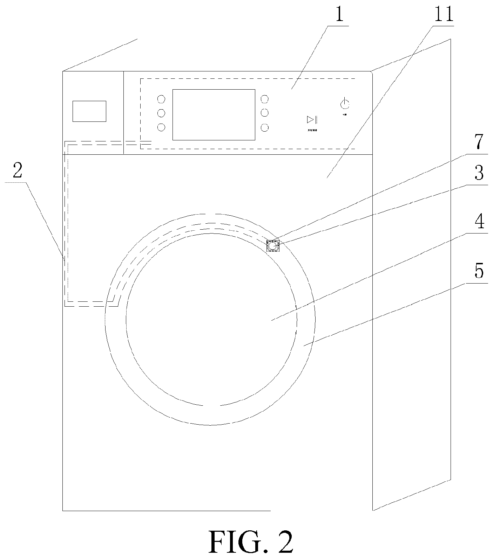

As shown in FIG. 2, a door-opening indicator for a drum washing machine is disposed on a door body 4 of the drum washing machine, the door body 4 is provided with a door lock that locks and unlocks the door body controlled by a computer programmable controller 1, the door-opening indicator includes a touch sensor 3 and a color-changeable indicator lamp set 7 that are connected to the computer programmable controller 1 of the washing machine, the touch sensor 3 includes a touch area 9 and an opening/closing sensor 8, the touch sensor 3 detects a touch signal and transmits the signal to the computer programmable controller 1 of the washing machine, the computer programmable controller 1 of the washing machine directly controls opening and closing of the door body and controls the indicator lamp set 7 to change colors according to changes of a washing state, so that the users can directly and conveniently see what state the washing machine door body 4 is in, for example, it displays with different colors that the door body 4 of the washing machine is in an opened stated, an openable state and opens the door body 4 of the washing machine or the door body 4 of the washing machine is in an unopenable state.

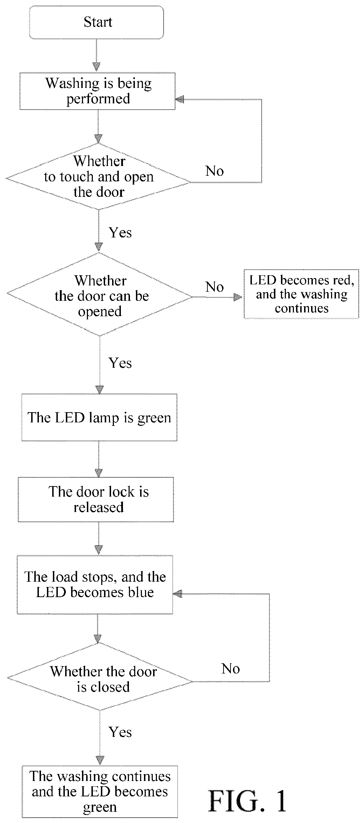

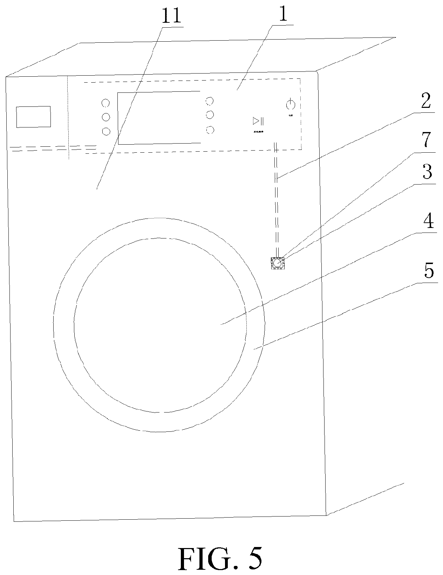

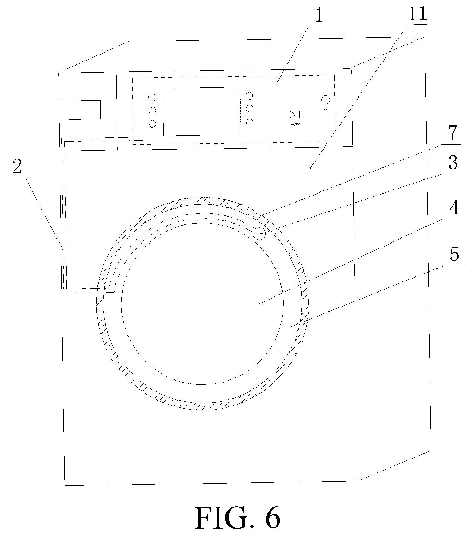

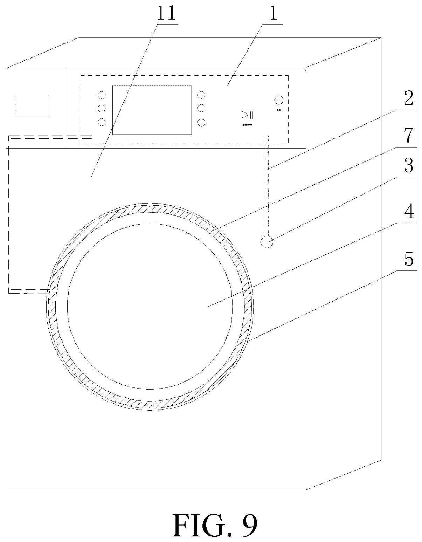

As shown in FIG. 1, in the present invention, the touch area 9 and the opening/closing sensor 8 of the touch sensor 3 and the color-changeable indicator lamp set 7 are all disposed on the door body 4 of the washing machine; as shown in FIG. 5, in the present invention, the touch area 9 and the opening/closing sensor 8 of the touch sensor 3 and the color-changeable indicator lamp set 7 are all disposed on the front portion 11 of the washing machine; it is also feasible to respectively dispose the touch area 9 and the opening/closing sensor 8 of the touch sensor 3 and the color-changeable indicator lamp set 7 on the door body 4 of the washing machine or the front portion 11 of the washing machine includes a control panel portion; as shown in FIG. 6, in one embodiment of the present invention, the touch area 9 and the opening/closing sensor 8 of the touch sensor 3 are disposed on the door body 4 of the washing machine, and the color-changeable indicator lamp set 7 is disposed on the front portion of the washing machine, preferably around the door body 4; or, on the contrary, as shown in FIG. 9, the color-changeable indicator lamp set is disposed on the door body of the washing machine, and the touch area 9 and the opening/closing sensor 8 of the touch sensor 3 are disposed on the front portion 11 of the washing machine.

As an option, in the present invention, the touch area 9, the opening/closing sensor 8 and the color-changeable indicator lamp set 7 are all disposed on the front portion 11 of the washing machine, which, in this case, are preferably disposed close to the door body 4 (refer to FIG. 5).

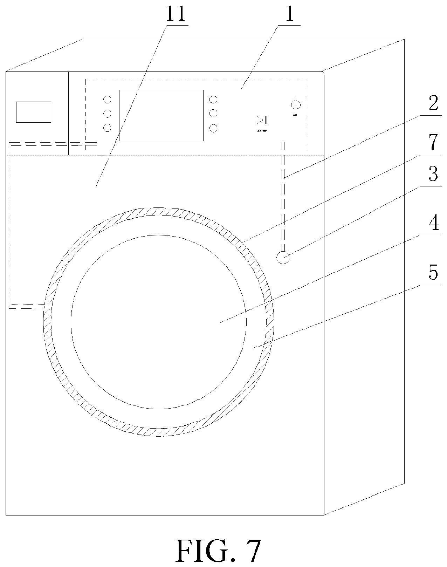

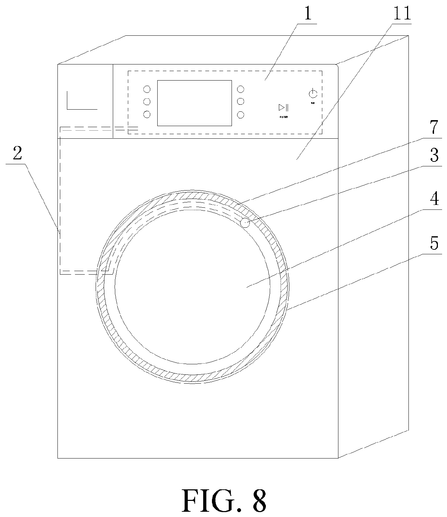

In the present invention, the color-changeable indicator lamp set 7 may be disposed on the door body of the washing machine or on the front portion 11 of the washing machine, in one embodiment of the present invention, the color-changeable indicator lamp set 7 is disposed on the front portion 11 of the washing machine and disposed around the door body (refer to FIG. 6 and FIG. 7), when the color-changeable indicator lamp set 7 is disposed on the door body 4 of the washing machine, the color-changeable indicator lamp set 7 is disposed on a ring-like decorative box 5 of the door body (refer to FIG. 8 and FIG. 9), which can give a definite and clear indication to consumers; generally, preferably, the color-changeable indicator lamp set is disposed adjacent to or around the touch area, in this way, the color-changeable indicator lamp set 7 is disposed on or around the touch area 9 (refer to FIG. 2 and FIG. 5), and if the color-changeable indicator lamp set 7 is disposed on the touch area, it can facilitate mounting.

According to the present invention, the touch area 9 and the opening/closing sensor 8 are connected to the computer programmable controller 1 through a cable 2, and the wiring direction of the cable 2 is through a hinge along a gap between a door body window screen and a viewing window and then connected to the computer programmable controller 1 along the housing of the washing machine. The touch area 9 is capacitive sensing or resistive sensing or optical sensing, the computer programmable controller 1 judges whether the door body can be opened according to a washing state of the washing machine, then controls the door lock and indicator lamp set, maintains the door lock in a locked or unlocked state, and maintains or changes the color of the indicator lamp.

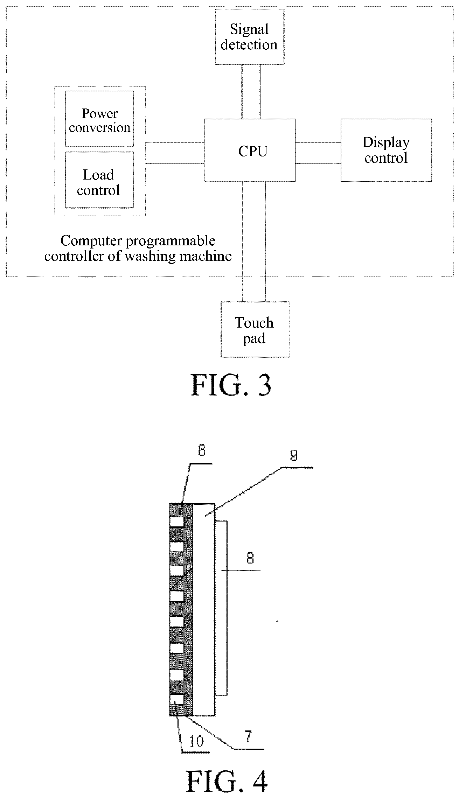

As shown in FIG. 4, in one embodiment of the present invention, the touch sensor 3 is provided with an opening/closing sensor 8, the opening/closing sensor 8 includes a PCB board, the PCB board is provided with a touch detection circuit, an indicator lamp set 7 is disposed around the PCB board, the touch sensor 3 controls opening and closing of the door body of the washing machine through the computer programmable controller 1, and the color of the indicator lamp set 7 changes the color through the computer programmable controller according to the washing state to indicate whether the user can open the door body now and controls opening of the door body according to the running state of the washing machine; in one embodiment of the present invention, the color of the indicator lamp set changes the color through the computer programmable controller 1 according to the washing state to indicate the user the working state of the washing machine.

As shown in FIG. 2, when the door-opening indicator is disposed on the door body 4, the door-opening indicator is connected to the computer programmable controller through a cable, the cable is connected to a hinge through a gap between a door body window screen and a viewing window and then connected to the computer programmable controller 1 along the housing of the washing machine. The indicator lamp set 7 consists of a color-changeable LED lamp 10 and a light guide region 6 covering the LED lamp 10, and the light guide region 6 is a transparent or semitransparent lampshade surrounding the touch area (refer to FIG. 4).

The cable 2 that supplies power for the touch sensor 3 connects the touch sensor and the indicator lamp set at the same time, and transmits a user's door open signal to the computer programmable controller 1, and the computer programmable controller 1 judges according to the washing state of the washing machine whether the door body has been opened, then sends a signal to the door lock and the indicator lamp, maintains the door lock in a locked or unlocked state, and maintains or changes the color of the indicator lamp.

In the present invention, after the computer programmable controller 1 receives a touch signal, the computer programmable controller 1 judges according to the washing state of the washing machine that the current door body 4 is at least in three states, an opened state, an openable state and an unopenable state, and controls the indicator lamp set 7 to display different colors of the corresponding at least three states; for example, the computer programmable controller detects whether the current door body is in an openable state, if yes, the computer programmable controller sends a signal to the door lock, controls the door body to unlock, the door body is opened, and the indicator lamp set is controlled to display a certain color, for example, green.

In the present invention, the computer programmable controller 1 of the washing machine directly controls opening and closing of the door body 4 according to the change of the washing state, and controls the indicator lamp set 7 to display different colors; when the user presses down the touch area of the touch sensor, the opening/closing sensor receives a touch sensing signal, and the computer programmable controller 1 of the washing machine sends a signal to the door lock of the door body 4 of the washing machine according to the washing state of the washing machine, to control locking and unlocking of the door lock; at the same time, a signal is sent to the indicator lamp, and the color of the indicator lamp is changed to indicate the user whether the door body 4 has been in an opened state or whether the door body 4 of the washing machine can be opened; wherein, when the washing machine is in a state that the door body has been opened, the indicator lamp displays a first color; after the washing machine completes washings, or the user touches a door-open button, as long as the washing machine meets a state that stalling of the motor is lower than a certain frequency value or the water level in the drum is lower than a certain value, or for a washing machine having a heating or drying function, the temperature in the drum is lower than a certain temperature value, the door body 4 of the washing machine is in an openable state; and
the method in which the computer programmable controller 1 of the washing machine judges the unopenable state of the current door body 4 according to the washing state of the washing machine includes: when the washing machine is in a state that the motor rotates at a high speed or the water level in the drum is higher than a certain value, the temperature in the drum is higher than a certain temperature value, the door body 4 of the washing machine is unopenable.

Even if the user presses down the touch area 9 of the touch sensor, the door body is still in the locked state and cannot be opened, at this point, the indicator lamp displays a third color, for example, it is feasible to set the first color indicating that the door body has been opened as blue, the second color indicating that the door body 4 of the washing machine can be opened and the third color indicating that the door body 4 of the washing machine cannot be opened; certainly, indication of the colors can be set arbitrarily, as long as the consumers' habits are met. Certainly, the same color may be set for that the door body is openable and has been opened, for example, both are blue.

In the present invention, the indicator lamp set 7 is directly electrically connected with the washing machine computer program computer 1, the washing machine computer program computer 1 may also control the indicator lamp set 7 to change the color to display the working state of the washing machine, that is, the indicator lamp set 7 indicates the washing flow state with different colors, wherein the washing flow state of the washing machine includes, but is not limited to, various working states such as water supply, washing, rinsing, drainage, spin-dry, drying and pause, for example, water supply is yellow, washing is apple green, rinsing is pea green, drainage is golden, spin-dry is purple, drying is orange, pause is brown and the like; as the indicator lamp set 7 of the present invention includes several lamp strips, and the working state of the washing machine can be further displayed through the change of the strength of the pipeline of the lamp strips, for example, strong washing, gentle, high-speed spin-dry or the drying temperature and the like, to provide the user with further convenience.

Further, the present invention makes the lamp strips in the indicator lamp set 7 present different functions, for example, some lamp strips display the color of the door body 4, and in this way, when the user opens the title of the washing machine, he can also directly understand the working state of the washing machine, to further facilitate the user.

FIG. 1 illustrates a door-opening control method for a drum washing machine having the door-opening indicator of the present invention, the method including: when the washing machine is in a working or stop state, the user touches the touch area 9 of the touch sensor 3, the touch sensor detects a touch signal and transmits the signal to the computer programmable controller 1 of the washing machine; the computer programmable controller 1 of the washing machine directly controls opening and closing of the door body 4 according to the working state of the washing machine, and controls the indicator lamp set 7 to display different colors to facilitate the users to directly obtain information indicating what state the door body 4 is in.

Different from the prior art, when the washing machine is in a use state, the user can directly touch the touch area 9 of the touch sensor to control opening of the door body 4 of the washing machine without pressing the start/pause button on the control panel.

The computer programmable controller 1 of the washing machine of the present invention sends a signal to the door lock of the washing machine according to the washing state of the washing machine, to control locking and unlocking of the door lock; at the same time, a signal is sent to the indicator lamp, and the color of the indicator lamp is changed to indicate the user whether the door body of the washing machine can be opened; and a touch signal detected by touching the button is used to control opening of the door body.

After the machine computer programmable controller 1 receives the detected touch signal, the machine computer programmable controller 1 judges according to the washing state of the washing machine that the current door body is at least in three states, an opened state, an openable state and an unopenable state, and controls the lamp set to display different colors of the corresponding at least three states; for example, the computer programmable controller detects whether the current door body is in an openable state, if yes, the computer programmable controller sends a signal to the door lock, controls the door body to unlock, the door body is opened, and the indicator lamp set is controlled to display a certain color, for example, green.

The method in which the computer programmable controller 1 of the washing machine judges the openable state of the current door body 4 according to the washing state of the washing machine includes:
after the washing machine completes washings, or the user touches a door-open button, as long as the washing machine meets a state that stalling of the motor is lower than a certain frequency value or the water level in the drum is lower than a certain value, or for a washing machine having a heating or drying function, the temperature in the drum is lower than a certain temperature value, the door body 4 of the washing machine is in an openable state; and
the method in which the computer programmable controller 1 of the washing machine judges the unopenable state of the current door body 4 according to the washing state of the washing machine includes: when the washing machine is in a state that the motor rotates at a high speed or the water level in the drum is higher than a certain value, the temperature in the drum is higher than a certain temperature value, the door body 4 of the washing machine is unopenable.

The touch area 9 of the present invention is capacitive sensing or resistive sensing or optical sensing, for example, infrared sensing; after the touch sensor senses the touch signal, the cable transmits a door-open indication signal to the computer programmable controller, the computer programmable controller detects whether the current door body is in an openable state, if yes, the computer programmable controller sends a signal to the door lock to control the door body to be unlocked, and the door body is opened.

The door lock is an electromagnetic door lock automatically popping up.

In the present invention, for indicating the open state of the door body 4, the change of the color of the indicator lamp set 7 is divided into at least three gears, which are respectively set as colors A1, A2 and A3 according to opened, openable and unopenable states of the door body. The A1, A2 and A3 are RGB-format colors, changes of the RGB colors are controlled by the computer programmable controller, and chromatic aberrations CV of the A1, A2 and A3 are all set to be greater than 20, to facilitate the user to identify the change of the color and accurately judge the state of the washing machine door body.

A terminal block connected with the cable is disposed in the touch area, which transmits signals and provides power.

As shown in FIG. 4, in the present invention, a touch area is disposed on a door of the washing machine, and around the touch area is light for guiding. If the region is touched, the door of the washing machine can be opened. The light around the touch area may change the color correspondingly according to the washing state of the washing machine and whether the door can be opened, to guide the user whether the door can be opened.

In the touch area, a touch pad is mounted to the back of the panel of the door of the washing machine, the touch pad is provided with a capacitive touch button, a signal lamp and a light guide strip, and the power of the touch pad is provided by the computer programmable controller of the washing machine, which are connected through wires. A connecting line is led out from the front control panel of the washing machine, is fixed, at a door hinge, to a gap between glass of a door window screen and a viewing window, and is connected with the touch pad. In this embodiment, the signal indicator lamp is an LED lamp, the LED lamp is an RGB indicator lamp, and when the door of the washing machine can be opened, the computer programmable controller drives the LED lamp to indicate green; when the door of the washing machine cannot be opened, the computer programmable controller drives the LED lamp to indicate red; after the door has been opened, the computer programmable controller drives the LED lamp to indicate blue.

## Claims

1. A drum washing machine having a heating or drying function and comprising a door-opening indicator, a control panel, a door body (4) being provided with a door lock that locks and unlocks the door body (4) controlled by a computer programmable controller (1) of the washing machine, and the door-opening indicator being disposed on the door body (4) of the drum washing machine and/or a front portion of the washing machine, wherein the door-opening indicator comprises a touch sensor (3) and a color-changeable indicator lamp set (7) that are connected to the computer programmable controller (1) of the washing machine, the touch sensor (3) comprises a touch area (9) and an opening/closing sensor (8), the touch sensor (3) detects a touch signal and transmits the signal to the computer programmable controller (1) of the washing machine,
whereby, when the washing machine is in a use state, the computer programmable controller (1) judges according to the washing state whether the door body (4) is in at least one of two states, an openable state and an unopenable state, and sends a corresponding instruction of controlling the door lock on the the door body (4), and the computer programmable controller (1) further controls the indicator lamp set (7) displaying different colors to maintain or change the color of the indicator lamp set (7) according to changes of the washing state and after the user directly touches the touch area (9) of the touch sensor (3) without pressing a start/pause button on the control panel, so that the indicator lamp set (7) displays colors of the corresponding at least two states indicating whether the state of the washing machine door body (4) is openable or unopenable,
the computer programmable controller (1) directly controls the door lock to maintain a locked or unlocked state, and after the washing machine completes washing or if the user directly touches the touch area (9) of the touch sensor (3) without pressing a start/pause button on the control panel, the computer programmable controller (1) judges the door body (4) to be in the openable state and unlocks the door body (4) at least as long as the washing machine meets a state that stalling of the motor is lower than a pre-defined frequency value, or the water level in the drum is lower than a pre-defined water value, or a temperature in the drum is lower than a pre-defined temperature value, and
the computer programmable controller (1) judges the door body (4) to be in the unopenable state and controls the door to remain locked, when the washing machine is in a state that the motor rotates at a speed higher than an pre-defined speed or the water level in the drum is higher than a pre-defined value, or the temperature in the drum is higher than a pre-defined temperature value.

2. The drum washing machine according to claim 1, wherein the touch sensor (3) and the color-changeable indicator lamp set (7) are respectively disposed on the door body of the washing machine and the front portion (11) of the washing machine, or the touch sensor (3) and the color-changeable indicator lamp set (7) are all disposed on the door body (4) of the washing machine, or are disposed on the front portion (11) of the washing machine.

3. The drum washing machine according to claim 1, wherein the touch area (9) and the opening/closing sensor (8) of the touch sensor (3) are disposed on the door body (4) of the washing machine, and the color-changeable indicator lamp set (7) is disposed on the front portion of the washing machine; or the touch area (9), the opening/closing sensor (8) and the color-changeable indicator lamp set (7) are all disposed on the door body (4) of the washing machine, and preferably, the color-changeable indicator lamp set (7) is disposed adjacent to or around the touch area (9).

4. The drum washing machine according to any one of claims 1 to 3, wherein the touch area (9), the opening/closing sensor (8) and the color-changeable indicator lamp set (7) are all disposed on a ring-like decorative box of the door body (4), preferably, the color-changeable indicator lamp set (7) is disposed around the touch area (9), and more preferably, the color-changeable indicator lamp set (7) is disposed on the touch area (9).

5. The drum washing machine according to claim 1, wherein the door-opening indicator is disposed on the door body (4), the door-opening indicator is connected to the computer programmable controller (1) through a cable (2), and the wiring direction of the cable (2) is through a hinge along a gap between a door body window screen and a viewing window and then connected to the computer programmable controller (1) along the housing of the washing machine.

6. The drum washing machine according to claim 1, wherein the touch area (9) is capacitive sensing or resistive sensing or optical sensing, the door lock is an electromagnetic door lock automatically popping up.

7. A door-opening control method for the drum washing machine with a heating or drying function and a door-opening indicator according to any one of claims 1 to 6, comprising the following steps:
1) touching, by a user, the touch area (9) of the touch sensor (3);
2) detecting, by the touch sensor, a touch signal, and transmitting the signal to the computer programmable controller (1) of the washing machine;
3) when the washing machine is in a use state, the computer programmable controller (1) judges according to the washing state whether the door body (4) is in at least one of two states, an openable state and an unopenable state, and sends a corresponding instruction of controlling the door lock on the the door body (4), and the computer programmable controller (1) further controls the indicator lamp set (7) displaying different colors to maintain or change the color of the indicator lamp set (7) according to changes of the washing state and after the user directly touches the touch area (9) of the touch sensor (3) without pressing a start/pause button on the control panel, so that the indicator lamp set (7) displays colors of the corresponding at least two states indicating whether the state of the washing machine door body (4) is openable or unopenable;
4) directly controlling, by the computer programmable controller (1) of the washing machine, the door lock to maintain a locked or unlocked state, and after the washing machine completes washing or if the user directly touches the touch area (9) of the touch sensor without pressing a start/pause button on the control panel, the computer programmable controller (1) judges the door body (4) to be in the openable state and unlocks the door body (4) at least as long as the washing machine meets a state that stalling of the motor is lower than a pre-defined frequency value, or the water level in the drum is lower than a pre-defined water value, or a temperature in the drum is lower than a pre-defined temperature value, and the computer programmable controller (1) judges the state of the door body (4) to be unopenable and controls the door to remain locked, when the washing machine is in a state that the motor rotates at a speed higher than an pre-defined speed or the water level in the drum is higher than a pre-defined value, or the temperature in the drum is higher than a pre-defined temperature value.

8. The door-opening control method for the drum washing machine according to claim 7, wherein the computer programmable controller (1) of the washing machine controls the indicator lamp set (7) to change the color to display the working state of the washing machine, wherein the washing flow state of the washing machine comprises one of water supply, washing, rinsing, drainage, spin-dry, drying and pause states or a combination thereof.

## Patentansprüche

1. Trommelwaschmaschine mit Heiz- oder Trocknungsfunktion und umfassend einen Türöffnungsanzeiger, ein Bedienfeld, einen Türkörper (4), der mit einer Türverriegelung versehen ist, die gesteuert von einer computerprogrammierbaren Steuerung (1) der Waschmaschine den Türkörper (4) verriegelt und entriegelt, und wobei der Türöffnungsanzeiger an dem Türkörper (4) der Trommelwaschmaschine und/oder einem vorderen Abschnitt der Waschmaschine angeordnet ist, wobei der Türöffnungsanzeiger einen Berührungssensor (3) und einen farbwechselfähigen Anzeigeleuchtensatz (7) umfasst, die mit der computerprogrammierbaren Steuerung (1) der Waschmaschine verbunden sind, wobei der Berührungssensor (3) eine Berührungsfläche (9) und einen Öffnungs-/Schließsensor (8) umfasst, wobei der Berührungssensor (3) ein Berührungssignal detektiert und das Signal an die computerprogrammierbare Steuerung (1) der Waschmaschine überträgt,
wobei, wenn die Waschmaschine sich in einem Verwendungszustand befindet, die computerprogrammierbare Steuerung (1) gemäß dem Waschzustand beurteilt, ob der Türkörper (4) sich in mindestens einem von zwei Zuständen, einem offenbaren und einem nicht offenbaren Zustand befindet, und eine entsprechende Steueranweisung der Türverriegelung an dem Türkörper (4) sendet, und die computerprogrammierbare Steuerung (1) ferner den Anzeigeleuchtensatz (7) steuert, der verschiedene Farben anzeigt, um die Farbe des Anzeigeleuchtensatzes (7) gemäß Änderungen des Waschzustands und nachdem der Benutzer die Berührungsfläche (9) des Berührungssensors (3) direkt berührt, ohne eine Start/Pause-Taste an dem Bedienfeld zu drücken, aufrechtzuerhalten oder zu wechseln, sodass der Anzeigeleuchtensatz (7) Farben der entsprechenden mindestens zwei Zustände anzeigt, die angeben, ob der Zustand des Waschmaschinentürkörpers (4) offenbar oder nicht offenbar ist,
die computerprogrammierbare Steuerung (1) die Türverriegelung direkt steuert, um einen verriegelten oder entriegelten Zustand aufrechtzuerhalten, und nachdem die Waschmaschine die Wäsche beendet hat oder wenn der Benutzer die Berührungsfläche (9) des Berührungssensors (3) direkt berührt, ohne eine Start/Pause-Taste an dem Bedienfeld zu drücken, die computerprogrammierbare Steuerung (1) beurteilt, dass der Türkörper (4) sich in dem öffenbaren Zustand befindet und den Türkörper (4) entriegelt, zumindest sofern die Waschmaschine einen Zustand erfüllt, in dem die Verzögerung des Motors unter einem vorgegebenen Frequenzwert liegt oder der Wasserpegel in der Trommel niedriger ist als ein vorgegebener Wasserwert oder eine Temperatur in der Trommel niedriger ist als ein vorgegebener Temperaturwert, und
die computerprogrammierbare Steuerung (1) beurteilt, dass der Türkörper (4) sich in dem nicht offenbaren Zustand befindet und steuert, dass die Tür verriegelt bleibt, wenn die Waschmaschine sich in einem Zustand befindet, in dem der Motor sich mit einer höheren Geschwindigkeit als einer vorgegebenen Geschwindigkeit dreht oder der Wasserpegel in der Trommel höher ist als ein vorgegebener Wert oder die Temperatur in der Trommel höher ist als ein vorgegebener Temperaturwert.

2. Trommelwaschmaschine nach Anspruch 1, wobei der Berührungssensor (3) und der farbwechselfähige Anzeigeleuchtensatz (7) jeweils an dem Türkörper der Waschmaschine und dem vorderen Abschnitt (11) der Waschmaschine angeordnet sind oder sowohl der Berührungssensor (3) als auch der farbwechselfähige Anzeigeleuchtensatz (7) an dem Türkörper (4) der Waschmaschine angeordnet sind oder an dem vorderen Abschnitt (11) der Waschmaschine angeordnet sind.

3. Trommelwaschmaschine nach Anspruch 1, wobei die Berührungsfläche (9) und der Öffnungs-/Schließsensor (8) des Berührungssensors (3) an dem Türkörper (4) der Waschmaschine angeordnet sind, und der farbwechselfähige Anzeigeleuchtensatz (7) an dem vorderen Abschnitt der Waschmaschine angeordnet ist; oder sowohl die Berührungsfläche (9), der Öffnungs-/Schließsensor (8) als auch der farbwechselfähige Anzeigeleuchtensatz (7) an dem Türkörper (4) der Waschmaschine angeordnet sind und vorzugsweise der farbwechselfähige Anzeigeleuchtensatz (7) benachbart zu der oder um die Berührungsfläche (9) herum angeordnet ist.

4. Trommelwaschmaschine nach einem der Ansprüche 1 bis 3, wobei sowohl die Berührungsfläche (9), der Öffnungs-/Schließsensor (8) als auch der farbwechselfähige Anzeigeleuchtensatz (7) an einem ringartigen dekorativen Kasten des Türkörpers (4) angeordnet sind, vorzugsweise der farbwechselfähige Anzeigeleuchtensatz (7) um die Berührungsfläche (9) herum angeordnet ist, und bevorzugter der farbwechselfähige Anzeigeleuchtensatz (7) auf der Berührungsfläche (9) angeordnet ist.

5. Trommelwaschmaschine nach Anspruch 1, wobei der Türöffnungsanzeiger an dem Türkörper (4) angeordnet ist, der Türöffnungsanzeiger durch ein Kabel (2) mit der computerprogrammierbaren Steuerung (1) verbunden ist und die Verkabelungsrichtung des Kabels (2) durch ein Scharnier entlang einer Lücke zwischen einer Türkörperfensterscheibe und einem Sichtfenster verläuft und dann entlang des Gehäuses der Waschmaschine mit der computerprogrammierbaren Steuerung (1) verbunden ist.

6. Trommelwaschmaschine nach Anspruch 1, wobei die Berührungsfläche (9) kapazitive Abtastung oder resistive Abtastung oder optische Abtastung ist, wobei die Türverriegelung eine elektromagnetische Türverriegelung ist, die automatisch aufspringt.

7. Türöffnungssteuerungsverfahren für die Trommelwaschmaschine mit einer Heiz- oder Trocknungsfunktion und einem Türöffnungsanzeiger nach einem der Ansprüche 1 bis 6, umfassend die folgenden Schritte:
1) Berühren, von einem Benutzer, der Berührungsfläche (9) des Berührungssensors (3);
2) Detektieren, von dem Berührungssensor, eines Berührungssignals, und Übertragen des Signals an die computerprogrammierbare Steuerung (1) der Waschmaschine;
3) wenn die Waschmaschine sich in einem Verwendungszustand befindet, beurteilt die computerprogrammierbare Steuerung (1) gemäß dem Waschzustand, ob der Türkörper (4) sich in mindestens einem von zwei Zuständen, einem offenbaren und einem nicht offenbaren Zustand befindet, und sendet eine entsprechende Steueranweisung der Türverriegelung an dem Türkörper (4), und die computerprogrammierbare Steuerung (1) steuert ferner den Anzeigeleuchtensatz (7), der verschiedene Farben anzeigt, um die Farbe des Anzeigeleuchtensatzes (7) gemäß Änderungen des Waschzustands und nachdem der Benutzer die Berührungsfläche (9) des Berührungssensors (3) direkt berührt, ohne eine Start/Pause-Taste an dem Bedienfeld zu drücken, aufrechtzuerhalten oder zu wechseln, sodass der Anzeigeleuchtensatz (7) Farben der entsprechenden mindestens zwei Zustände anzeigt, die angeben, ob der Zustand des Waschmaschinentürkörpers (4) offenbar oder nicht offenbar ist;
4) direktes Steuern, von der computerprogrammierbaren Steuerung (1) der Waschmaschine, der Türverriegelung, um einen verriegelten oder entriegelten Zustand aufrechtzuerhalten, und nachdem die Waschmaschine die Wäsche beendet hat oder wenn der Benutzer die Berührungsfläche (9) des Berührungssensors direkt berührt, ohne eine Start/Pause-Taste an dem Bedienfeld zu drücken, beurteilt die computerprogrammierbare Steuerung (1), dass der Türkörper (4) sich in dem offenbaren Zustand befindet und entriegelt den Türkörper (4), zumindest sofern die Waschmaschine einen Zustand erfüllt, in dem die Verzögerung des Motors unter einem vorgegebenen Frequenzwert liegt oder der Wasserpegel in der Trommel niedriger ist als ein vorgegebener Wasserwert oder eine Temperatur in der Trommel niedriger ist als ein vorgegebener Temperaturwert, und
beurteilt die computerprogrammierbare Steuerung (1), dass der Türkörper (4) sich in dem nicht offenbaren Zustand befindet und steuert, dass die Tür verriegelt bleibt, wenn die Waschmaschine sich in einem Zustand befindet, in dem der Motor sich mit einer höheren Geschwindigkeit als einer vorgegebenen Geschwindigkeit dreht oder der Wasserpegel in der Trommel höher ist als ein vorgegebener Wert oder die Temperatur in der Trommel höher ist als ein vorgegebener Temperaturwert.

8. Türöffnungsverfahren für die Trommelwaschmaschine nach Anspruch 7, wobei die computerprogrammierbare Steuerung (1) der Waschmaschine den Anzeigeleuchtensatz (7) steuert, die Farbe zu wechseln, um den Arbeitszustand der Waschmaschine anzuzeigen, wobei der Waschablaufzustand der Waschmaschine einen von Wasserzufuhr-, Wasch-, Spül-, Abpump-, Schleuder-, Trocknungs- und Pausezuständen oder eine Kombination davon umfasst.

## Revendications

1. Machine à laver à tambour présentant une fonction de chauffage ou de séchage et comprenant un indicateur d'ouverture de porte, un tableau de commande, un corps de porte (4) étant pourvu d'un verrou de porte qui verrouille et déverrouille le corps de porte (4) commandé par une unité de commande programmable par ordinateur (1) de la machine à laver, et l'indicateur d'ouverture de porte étant disposé sur le corps de porte (4) de la machine à laver à tambour et/ou une partie avant de la machine à laver, l'indicateur d'ouverture de porte comprenant un capteur de contact (3) et un ensemble de voyants lumineux (7) pouvant changer de couleur qui sont connectés à l'unité de commande programmable par ordinateur (1) de la machine à laver, le capteur de contact (3) comprenant une zone de contact (9) et un capteur d'ouverture/fermeture (8), le capteur de contact (3) détectant un signal de contact et transmettant le signal à l'unité de commande programmable par ordinateur (1) de la machine à laver,
moyennant quoi, quand la machine à laver est en fonctionnement, l'unité de commande programmable par ordinateur (1) détermine en fonction de l'état de lavage si le corps de porte (4) est dans au moins un de deux états, un état pouvant être ouvert et un état ne pouvant pas être ouvert, et envoie une instruction correspondante de commande du verrou de porte sur le corps de porte (4), et l'unité de commande programmable par ordinateur (1) commande en outre l'ensemble de voyants lumineux (7) affichant différentes couleurs afin qu'il conserve ou change la couleur de l'ensemble de voyants lumineux (7) selon des changements de l'état de lavage et après que l'utilisateur a touché directement la zone de contact (9) du capteur de contact (3) sans appuyer sur un bouton de démarrage/pause sur le tableau de commande, de telle sorte que l'ensemble de voyants lumineux (7) affiche des couleurs des au moins deux états correspondants indiquant si l'état du corps de porte (4) de la machine à laver est l'état pouvant être ouverte ou ne pouvant pas être ouvert,
l'unité de commande programmable par ordinateur (1) commande directement le verrou de porte afin qu'il conserve un état verrouillé ou déverrouillé, et après que la machine à laver a terminé le lavage ou si l'utilisateur touche directement la zone de contact (9) du capteur de contact (3) sans appuyer sur un bouton de démarrage/pause sur le tableau de commande, l'unité programmable par ordinateur (1) détermine que le corps de porte (4) est dans l'état pouvant être ouvert et déverrouille le corps de porte (4) au moins tant que la machine à laver est dans un état dans lequel le calage du moteur est inférieur à une valeur de fréquence prédéfinie, ou le niveau d'eau dans le tambour est inférieur à une valeur d'eau prédéfinie, ou une température dans le tambour est inférieure à une valeur de température prédéfinie, et
l'unité de commande programmable par ordinateur (1) détermine que le corps de porte (4) est dans l'état ne pouvant pas être ouvert et commande la porte afin qu'elle reste verrouillée quand la machine à laver est dans un état dans lequel le moteur tourne à une vitesse supérieure à une vitesse prédéfinie ou le niveau d'eau dans le tambour est supérieur à une valeur prédéfinie, ou la température dans le tambour est supérieure à une valeur de température prédéfinie.

2. Machine à laver à tambour selon la revendication 1, dans laquelle le capteur de contact (3) et l'ensemble de voyants lumineux (7) pouvant changer de couleur sont disposés respectivement sur le corps de porte de la machine à laver et la partie avant (11) de la machine à laver, ou le capteur de contact (3) et l'ensemble de voyants lumineux (7) pouvant changer de couleur sont tous disposés sur le corps de porte (4) de la machine à laver, ou sont disposés sur la partie avant (11) de la machine à laver.

3. Machine à laver à tambour selon la revendication 1, dans laquelle la zone de contact (9) et le capteur d'ouverture/fermeture (8) du capteur de contact (3) sont disposés sur le corps de porte (4) de la machine à laver, et l'ensemble de voyants lumineux (7) pouvant changer de couleur est disposé sur la partie avant de la machine à laver ; ou la zone de contact (9), le capteur d'ouverture/fermeture (8) et l'ensemble de voyants lumineux (7) pouvant changer de couleur sont tous disposés sur le corps de porte (4) de la machine à laver, et de préférence l'ensemble de voyants lumineux (7) pouvant changer de couleur est disposé adjacent à ou autour de la zone de contact (9).

4. Machine à laver à tambour selon une des revendications 1 à 3, dans laquelle la zone de contact (9), le capteur d'ouverture/fermeture (8) et l'ensemble de voyants lumineux (7) pouvant changer de couleur sont tous disposés sur un boîtier décoratif en forme d'anneau du corps de porte (4), l'ensemble de voyants lumineux (7) pouvant changer de couleur est de préférence disposé autour de la zone de contact (9), et plus préférablement, l'ensemble de voyants lumineux (7) pouvant changer de couleur est disposé sur la zone de contact (9).

5. Machine à laver à tambour selon la revendication 1, dans laquelle l'indicateur d'ouverture de porte est disposé sur le corps de porte (4), l'indicateur d'ouverture de porte est connecté à l'unité de commande programmable par ordinateur (1) par un câble (2), et le câblage du câble (2) suit une direction passant par une charnière le long d'un espace entre un masque de hublot de corps de porte et un hublot d'observation et venant ensuite se connecter à l'unité de commande programmable par ordinateur (1) le long de l'enveloppe de la machine à laver.

6. Machine à laver à tambour selon la revendication 1, dans laquelle la zone de contact (9) est à détection capacitive, à détection résistive ou à détection optique, le verrou de porte est un verrou de porte électromagnétique s'ouvrant automatiquement.

7. Procédé de commande d'ouverture de porte pour la machine à laver à tambour dotée d'une fonction de chauffage ou de séchage et d'un indicateur d'ouverture de porte selon une des revendications 1 à 6, comprenant les étapes suivantes :
1) contact, par un utilisateur, de la zone de contact (9) du capteur de contact (3) ;
2) détection, par le capteur de contact, d'un signal de contact, et transmission du signal à l'unité de commande programmable par ordinateur (1) de la machine à laver ;
3) quand la machine à laver est en fonctionnement, l'unité de commande programmable par ordinateur (1) détermine en fonction de l'état de lavage si le corps de porte (4) est dans au moins un de deux états, un état pouvant être ouvert et un état ne pouvant pas être ouvert, et envoie une instruction correspondante de commande du verrou de porte sur le corps de porte (4), et l'unité de commande programmable par ordinateur (1) commande en outre l'ensemble de voyants lumineux (7) affichant différentes couleurs afin qu'il conserve ou change la couleur de l'ensemble de voyants lumineux (7) selon des changements de l'état de lavage et après que l'utilisateur a touché directement la zone de contact (9) du capteur de contact (3) sans appuyer sur un bouton de démarrage/pause sur le tableau de commande, de telle sorte que l'ensemble de voyants lumineux (7) affiche des couleurs des au moins deux états correspondants indiquant si l'état du corps de porte (4) de la machine à laver est l'état pouvant être ouvert ou ne pouvant pas être ouvert ;
4) commande directe, par l'unité de commande programmable par ordinateur (1) de la machine à laver, du verrou de porte afin qu'il conserve un état verrouillé ou déverrouillé, et après que la machine à laver a terminé le lavage ou si l'utilisateur touche directement la zone de contact (9) du capteur de contact sans appuyer sur un bouton de démarrage/pause sur le tableau de commande, l'unité de commande programmable par ordinateur (1) détermine que le corps de porte (4) est dans l'état pouvant être ouvert et déverrouille le corps de porte (4) au moins tant que la machine à laver est dans un état dans lequel le calage du moteur est inférieur à une valeur de fréquence prédéfinie, ou le niveau d'eau dans le tambour est inférieur à une valeur d'eau prédéfinie, ou une température dans le tambour est inférieure à une valeur de température prédéfinie, et l'unité de commande programmable par ordinateur (1) détermine que l'état du corps de porte (4) est l'état ne pouvant pas être ouvert et commande la porte afin qu'elle reste verrouillée quand la machine à laver est dans un état dans lequel le moteur tourne à une vitesse supérieure à une vitesse prédéfinie ou le niveau d'eau dans le tambour est supérieur à une valeur prédéfinie, ou la température dans le tambour est supérieure à une valeur de température prédéfinie.

8. Procédé de commande d'ouverture de porte pour la machine à laver à tambour selon la revendication 7, dans lequel l'unité de commande programmable par ordinateur (1) de la machine à laver commande l'ensemble de voyants lumineux (7) afin qu'il change de couleur pour afficher l'état de fonctionnement de la machine à laver, l'état de progression du lavage de la machine à laver comprenant un état parmi l'alimentation en eau, le lavage, le rinçage, la vidange, l'essorage, le séchage et la pause ou une combinaison de ceux-ci.
